# EUROPÄISCHE PATENTSCHRIFT

(11) **EP 1 068 044 B1**
(45) Veröffentlichungstag und Bekanntmachung des Hinweises auf die Patenterteilung: **23.04.2003**
(21) Anmeldenummer: 99962145.1
(22) Anmeldetag: 12.11.1999
(51) Int. Cl.: B23Q 1/54, B25J 17/02, B23Q 1/62

(54) **TRIPOD-LAGERUNGSEINRICHTUNG UND VERFAHREN ZUR TORSIONSKOMPENSATION**
TRIPOD MOUNTING DEVICE AND METHOD FOR COMPENSATING FOR TORSION
DISPOSITIF DE SUPPORT TREPIED ET PROCEDE DE COMPENSATION DE TORSION

(30) Priorität: 29.01.1999 DE 19903613
(43) Veröffentlichungstag der Anmeldung: 17.01.2001
(73) Patentinhaber: Fraunhofer-Gesellschaft zur Förderung der angewandten Forschung e.V., 80636 München (DE)
(72) Erfinder: SCHWAAR, Michael, D-09232 Hartmannsdorf (DE); KIRCHNER, Jan, D-65375 Oestrich-Winkel (DE); NEUGEBAUER, Reimund, D-01462 Dresden (DE)
(74) Vertreter: Grünecker, Kinkeldey, Stockmair & Schwanhäusser Anwaltssozietät
(86) Internationale Anmeldenummer: EP9908723
(87) Internationale Veröffentlichungsnummer: WO00044526

(56) Entgegenhaltungen:
- EP-A- 0 674 969
- DE-A- 19 636 100
- DE-A- 19 636 102
- US-A- 4 569 627
- US-A- 4 790 718
- ROJEK P ET AL: "SCHNELLE KOORDINATENTRANSFORMATION UND FUEHRUNGSGROESSENERZEUGUNG FUER BAHNGEFUEHTE INDUSTRIEROBOTER. FAST COORDINATE TRANSFORMATION AND PROCESSING OF COMMAND SIGNALS FOR CONTINUOUS PATH ROBOT CONTROL" ROBOTERSYSTEME,DE,SPRINGER VERLAG. BERLIN, Bd. 2, Nr. 2, 1. Januar 1986 (1986-01-01), Seiten 73-81, XP002039523

## Beschreibung

Die Erfindung betrifft eine Tripod-Lagerungseinrichtung mit einem feststehenden Gestell und einem relativ dazu bewegbaren Träger, die über drei in ihrer Länge verstellbare Streben miteinander verbunden sind, wie sie z.B. aus der US-A-4 569 627 bekannt ist. Weiterhin betrifft die Erfindung ein Verfahren zur Torsionskompensation in der vorgenannten Vorrichtung.

Solche Vorrichtungen bzw. Verfahren werden in Werkzeugmaschinen zur Aufnahme und Bewegung eines Werkzeuges verwendet, das in der Regel an dem Träger befestigt und durch eine Relativbewegung gegenüber einem an dem Gestell gehaltenen Werkstück zugestellt werden kann. Weitere Anwendungsgebiete für Tripod-Lagerungsvorrichtungen sind Handlingsysteme und Roboter, bei denen beispielsweise an dem Träger ein Manipulator, eine Klemmvorrichtung oder ein Greifer angebracht werden kann.

Im Unterschied zu konventionellen, dreiachsigen Werkzeugführungen, bei denen für jede Linearachse ein eigener, angetriebener Schlitten vorgesehen ist, wobei diese Schlitten in Reihe geschaltet sind, handelt es sich bei Tripod-Lagerungsvorrichtungen um sogenannte Parallelstrukturen, bei denen für eine Linearbewegung in Richtung einer Achse in der Regel nicht nur ein, sondern mehrere Zustellorgane, beispielsweise in ihrer Länge verstellbare Streben betätigt werden müssen.

Zu dem Gebiet der Parallelstrukturen gehören auch sogenannte Hexapoden, die sich durch eine sechsbeinige Aufhängung des Trägers an dem Gestell auszeichnen. Ein Hexapod-Bearbeitungszentrum sowie eine Vorrichtung und ein Verfahren zur Steuerung desselben sind aus der DE 196 36 100 A1 und DE 196 36 102 A1 derselben Anmelderin bekannt.

Die genannten Hexapoden ermöglichen, bei Anordnung eines Bearbeitungswerkzeuges an dem Träger, eine fünfachsige Bearbeitung an einem an dem Gestell festgelegten Werkstück, wobei Translationen in sämtliche Raumrichtungen sowie Schwenkbewegungen um zu der Spindelachse des Bearbeitungswerkzeuges senkrecht verlaufender Achsen möglich sind. Bei solchen Hexapoden werden die einzelnen Streben ausschließlich auf Zug und Druck belastet, so daß es möglich ist, relativ lange Streben zu verwenden, die eine relativ geringe Torsionssteifigkeit aufweisen, was bei Hexapoden im Hinblick auf eine möglichst freie Bewegung des Trägers im Raum unter dem Gesichtspunkt von Strebenkollisionen günstig ist.

Hexapoden sind jedoch aufgrund ihrer Komplexität nicht nur hinsichtlich ihrer Struktur, sondern auch ihrer Steuerung technisch aufwendig und daher für Anwendungsfälle, in denen eine geringere Bearbeitungsvariabilität ausreicht ist, weniger rentabel.

Bei Anwendungsfällen, bei denen lediglich eine dreiachsige Bearbeitung gefragt ist, besteht die Möglichkeit, die Strebenanzahl und damit die Komplexität der Vorrichtung gegenüber einem Hexapoden zu verringern. Die hierbei auftretenden Komplikationen aus der Bindung von rotatorischen Freiheitsgraden verhindern, daß bei Hexapoden übliche Konstruktionsprinzipien ohne weiteres auf Strukturen mit geringerer Strebenanzahl übertragen werden können. Durch die Bindung der rotatorischen Freiheitsgrade treten im Gegensatz zu Hexapoden neben Zug- und Druckkräften auch Torsionsmomente auf, für die die üblicherweise bei Hexapoden verwendeten Streben mit geringer Torsionssteifigkeit an sich ungeeignet sind. Eine torsionssteifere Ausführung würde jedoch aufgrund der räumlichen Restriktionen insbesondere an einem kompakten Träger die Beweglichkeit desselben negativ beeinträchtigen.

Im Hinblick auf die Torsionsproblematik ist bereits vorgeschlagen worden, bei einer Tripod-Lagerungsvor-richtung, d.h. einer Vorrichtung mit drei Streben, diese jeweils als Doppelstäbe auszubilden, so daß auftretende Momente jeweils in zwei Zug/Druckkraftanteile aufgeteilt werden. Diese Lösungen verwenden jedoch längenunveränderliche Streben, bei denen die Zustellung des Trägers durch eine gestellseitige Fußpunktverschiebung der Streben verwirklicht wird. Eine solche Lösung ist jedoch bei Streben, die in ihrer Länge verstellbar sein sollen, impraktikabel.

Längenunveränderliche Streben mit Fußpunktführung weisen überdies den Nachteil auf, daß durch die Führungsbahnen der Fußpunkte Fehler in die Lagerung des Trägers eingebracht werden, die nur sehr schwierig und aufwendig zu kompensieren sind.

Demgegenüber liegt der Erfindung die Aufgabe zugrunde, eine Tripod-Lagerungsvorrichtung mit in ihrer Länge verstellbaren Streben zu schaffen, die eine hohe Genauigkeit der Zustellung bei geringem technischen Aufwand ermöglicht.

Diese Aufgabe wird bei der eingangs genannten Tripod-Lagerungsvorrichtung dadurch gelöst, daß jede Strebe an dem Gestell und an dem Träger über je ein Gelenk mit zwei Drehfreiheitsgraden angekoppelt ist, und eine Torsionskompensationsregelvorrichtung mit den einzelnen Streben jeweils zugeordneten Torsionsantrieben zusammenwirkt zum Verdrehen des trägerseitigen Gelenks der betreffenden Strebe relativ zu dem gestellseitigen Gelenk dieser Strebe um deren Längsachse zur Ausregelung von in den Streben auftretenden Torsionen.

Mit der erfindungsgemäßen Lösung können durch die Torsionsantriebe der einzelnen Streben in der Parallelstruktur auftretende Torsionen, die zu einer rotatorischen Abweichung des Trägers von seiner Sollposition führen, gezielt ausgeglichen, vorzugsweise auf Null reduziert werden. Insbesondere kann die aufgrund von Bearbeitungskräften auftretende Verlagerung einer an dem Träger vorgesehenen Hauptspindel kompensiert werden, wodurch praktisch eine wesentlich höhere Steifigkeit der Lagerung des Träges gegenüber konventionellen Vorrichtungen erzielt werden kann, ohne daß hierzu eine Strukturverstärkung an den Streben vorgenommen werden müßte. Somit kann auch eine hohe Beweglichkeit des Trägers im Raum selbst bei einem räumlich kompakten Träger verwirklicht werden. Überdies können Fertigungsungenauigkeiten sowie thermisch beeinflußte Maßveränderung steuerungstechnisch in allen sechs Freiheitsgraden kompensiert werden. Im Gegensatz hierzu ist dies bei konventionellen Dreiachsenreihenstrukturen lediglich für die drei translatorischen Freiheitsgrade möglich.

Gemäß einer vorteilhaften Ausgestaltung der Erfindung ist der Torsionsantrieb zwischen dem trägerseitigen Gelenk und dem gestellseitigen Gelenk, vorzugsweise an dem trägerseitigen Ende der Strebe angeordnet. Letzteres ist insbesondere dann von Vorteil, wenn der Torsionsantrieb im Vergleich zu der Strebe relativ leichtgewichtig ist. Mit kleinen, trägerseitigen Massen lassen sich hohe Beschleunigungen verwirklichen, wodurch eine hohe Fertigungsgeschwindigkeit möglich ist.

Vorzugsweise ist der Torsionsantrieb als rotatorische Antriebsvorrichtung für kleine Wege mit hoher Antriebsgeschwindigkeit ausgebildet. Der rotatorische Antrieb stellt dabei einen Zusatzantrieb zu dem translatorischen Hauptantrieb der Streben dar, der große Wege mit einer relativ großen Eigenmasse zurücklegt. Hieraus resultiert eine hohe Grenzfrequenz der gesamten Anordnung.

Gemäß einer vorteilhaften Ausgestaltung ist der Träger an den Streben im Raum orientierungsgetreu gelagert, d.h. bei einer Bewegung des Trägers im Raum behält dieser seine Ausrichtung zu den translatorischen Raumachsen stets bei.

Gemäß einer weiteren vorteilhaften Ausgestaltung ist an den Streben jeweils eine Vorrichtung zur Ermittlung einer Torsion der betreffenden Strebe um deren Längsachse vorgesehen zur Erzeugung eines Signals, in Abhängigkeit dessen jeweils der Torsionsantrieb der betreffenden Strebe betätigt wird. Durch die unmittelbare Erfassung der tatsächlich auftretenden Torsionen lassen sich diese während des Betriebs der Tripod-Lagerungsvorrichtung on-line, d.h. während einem Bearbeitungsvorgang kompensieren. Prinzipiell können die Torsionsantriebe auch in einem gewissen Umfang zur Erzeugung von Torsionen eingesetzt werden, sofern im Rahmen eines Bearbeitungsvorganges geringfügige Schwenkbewegungen um die Translationsachsen erwünscht sein sollten.

Nach einer weiteren vorteilhaften Ausgestaltung ist in eine Steuer- und/oder Regelvorrichtung zur Längenveränderung der Streben eine Torsionskompensationsregelvorrichtung integriert, die einen Regler sowie die Vorrichtung zur Ermittlung der Torsionen der Streben umfaßt, wobei dem Regler eingangsseitig eine Regeldifferenz aufgeschaltet ist, die aus Parametern, die die Torsionssollwerte repräsentieren, und Parametern, die von der Torsionsermittlungsvorrichtung erzeugten Torsionssistwerte repräsentieren, gebildet ist, und der Reglerausgang auf die Torsionsantriebe geschaltet ist. Hiermit lassen sich auftretende Störgrößen wie aus einem Bearbeitungsvorgang resultierende Momente in gewünschter Art und Weise je nach Konfiguration des Reglers ausgleichen. Die Regelung kann dabei sowohl analog als auch digital erfolgen, wobei ersteres den Vorteil einer großen Dynamik des Systems bietet.

Im Gegensatz zu Hexapoden ist es bei Tripoden oftmals möglich, eine geschlossene analytische Lösung der Vorwärtstransformation zu bestimmen. Hierdurch kann im Fall der digitalen Regelung die Abtastrate und damit die Regelgüte erhöht werden.

Die übergeordnete Steuer- und/oder Regelvorrichtung gibt lediglich Sollwerte, wie zum Beispiel Off-Set-Größen aus der Kalibrierung oder der thermischen Verlagerung des Systems an die rotatorischen Antriebe, wobei diese Größen einen eher statischen Charakter aufweisen und nur sehr langsam verändert werden.

Nach einer weiteren vorteilhaften Ausgestaltung erfolgt die Rückkopplung der die Torsionsistwerte repräsentierenden Parameter auf die Reglereingangsseite autonom, ohne die Bewegungssteuerung und/oder Regelung der Längenveränderungen der Streben zu beeinflussen. Hierzu wird für die Längenänderung der Streben ein kaskadenförmiges Steuerungskonzept verwendet, dem die Torsionskompensationsregelung autonom untergeordnet ist.

Die eingangs genannte Aufgabe wird weiterhin gelöst durch ein Verfahren zur Torsionskompensation in einer Vorrichtung nach einem der Ansprüche 1 bis 12, bei dem in den Streben auftretende, lastbedingte Torsionen erfaßt, mit Solltorsionen verglichen und die ermittelte Torsionsdifferenz durch Beaufschlagung der Torsionsantriebe ausgeregelt wird. Dieses Verfahren ermöglicht es, auf kostengünstige Weise die dynamische Steifigkeit einer Tripod-Lagerungsvorrichtung und somit die Fertigungsgenauigkeit zu erhöhen, ohne daß hierdurch die Beweglichkeit der Vorrichtung beeinträchtigt würde.

Weitere vorteilhafte Ausgestaltungen sind in den Unteransprüchen angegeben. Nachfolgend wird ein Ausführungsbeispiel der Erfindung anhand der beigefügten Zeichnungen näher erläutert. Diese zeigen in:
- Fig. 1: eine räumliche Ansicht einer Tripod-Lagerungsvorrichtung nach der Erfindung, und in
- Fig. 2: den Torsionskompensationsregelkreis für die in Fig. 1 dargestellte Tripod-Lagerungsvorrichtung.

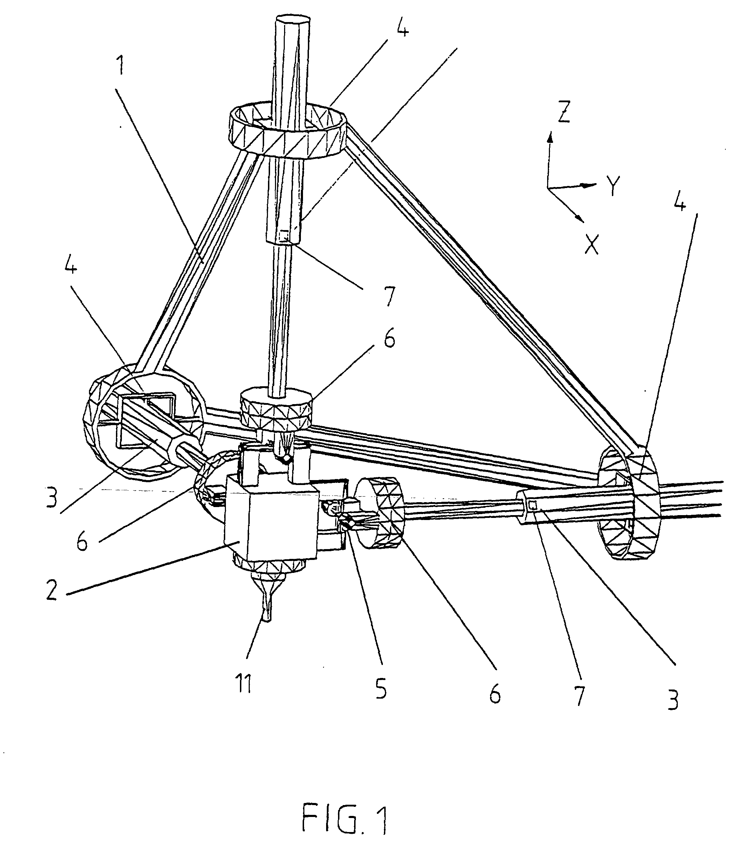

In Figur 1 ist eine Tripod-Lagerungsvorrichtung mit einem Gestell 1 und einem relativ dazu bewegbaren Träger 2 dargestellt, die in ein Maschinenbett integriert und prinzipiell in einer Werkzeugmaschine, einem Handlingssystem oder einem Roboter verwendet werden kann. in dem gezeigten Ausführungsbeispiel ist an dem Träger 2 eine Spindel 11 zur Aufnahme eines Bearbeitungswerkzeugs, beispielsweise eines Bohrers oder Fräsers oder dergleichen angeordnet. Das Gestell 2 ist als räumliches Dreieck in Fachwerkstruktur ausgebildet, an dessen Ecken jeweils ein Ring zur Lagerung eines Gelenkes vorgesehen ist. Die Fachwerkstruktur ist dabei so ausgestaltet, daß die Verbindungen zwischen den Gelenkaufnahmeringen stets gleich lang sind. Die Gelenkaufnahmeringe liegen jeweils in einer eigenen Ebene, wobei jede der drei Ebenen zu den jeweils beiden anderen Ebenen im Raum senkrecht liegt, vorzugsweise jeweils unter einem Winkel von 90°.

Der Träger 2 ist als räumlicher Körper zur Aufnahme der bereits erwähnten Spindel 11 ausgebildet und besitzt in dem Ausführungsbeispiel eine kubische Form. Jeweils eine Seite des Trägers 2 ist zu einer Ebene der Gelenkaufnahmeringe des Gestells 1 hin orientiert.

Der Träger 2 ist über drei Streben 3 an dem Gestell 1 abgestützt, wobei sämtliche Streben gleichartig ausgestaltet sind. Dies ermöglicht eine hohe Anzahl von Wiederholteilen und eine baukastenartige System-Struktur. Jede Strebe 3 ist über ein erstes, gestellseitiges Gelenk 4 an dem Gestell 1 und über ein zweites, trägerseitiges Gelenk 5 an dem Träger 2 angekoppelt. Fig. 1 zeigt eine Ruhestellung der Tripod-Lagerungsvorrichtung. In dieser Ruhestellung befinden sich die Streben in einem torsionsfreien Zustand. Die Streben erstrecken sich dabei in die drei Raumrichtungen X, Y, Z, die ein Orthogonalsystem bilden. Sie sind jeweils in ihrer Längsrichtung, d.h. in Richtung ihrer Längsachse in ihrer Länge verstellbar, wobei hier Linearantriebe in Frage kommen, die zur Übertragung von Torsionskräften geeignet sind. Beispielsweise können Hydraulikmotoren verwendet werden, wobei der schwerere Zylinder auf der Gestellseite und die Kolbenstange auf der Trägerseite angeordnet wird.

Die Ankopplung der Streben 3 erfolgt, wie bereits erwähnt, über Gelenke 4, 5 mit jeweils zwei Freiheitsgraden. In dem dargestellten Ausführungbeispiel sind hierzu Kreuzgelenke gezeigt, die ein Schwenken um zwei senkrecht zu der Längsrichtung der jeweiligen Strebe 3 und zueinander stehende Achsen ausgebildet sind. Die gestellseitigen Gelenke 4 sind entsprechend den trägerseitigen Gelenken 5 ausgebildet. Da bei einer Längenveränderung der Streben diese in den gestellseitigen Gelenken 4 verschwenkt werden, werden die Massen der Zylinder der Streben 3 in den Gelenkaufnahmeringen des Gestells 1 ausbalanciert, in dem die Zylinder durch die Gelenkaufnahmeringe hindurchverlaufen.

Weiterhin ist jeder Strebe 3 ein Torsionsantrieb 6 zugeordnet, der in dem dargestellten Ausführungsbeispiel zwischen dem trägerseitigen Gelenk 5 und dem gestellseitigen Gelenk 4 an dem tägerseitigen Ende der jeweiligen Strebe 3 angeordnet ist. Der Torsionsantrieb 6 kann auch zwischen dem Gestell 1 und dem gestellseitigen Gelenk 4 oder zwischen dem Träger 2 und dem trägerseitigen Gelenk 5 angeordnet werden.

Der Torsionsantrieb 6 ist als rotatorische Antriebsvorrichtung für kleine Wege mit hoher Antriebsgeschwindigkeit ausgebildet. Er weist überdies im Vergleich zu dem Längsantrieb der Streben eine erheblich geringere Masse auf, woraus insgesamt eine hohe Grenzfrequenz der Antriebsanordnung resultiert, die eine schnelle Ausregelung von an den Streben auftretenden, unerwünschten Torsionen infolge eines Bearbeitungsvorganges ermöglicht. Überdies können neben solchen Abweichungen auch Fertigungstoleranzen der Lagerung des Trägers bzw. der Spindel 11 sowie thermische Verformungen der gesamten Parallelstruktur unter Zugrundelegung eines thermischen Modells derselben ausgeglichen werden.

Figur 1 zeigt, wie bereits ausgeführt, die Tripod-Lagerungsvorrichtung in einer Ruhestellung, bei der sich die Streben in den drei Raumrichtungen X, Y, Z senkrecht zueinander erstrecken. Da alle Streben gleichartig ausgebildet sind, ist in diesem Fall auch die Auszugslänge für jede der Streben 3 gleich. Die Aufhängung über Gelenke 4, 5 mit jeweils zwei Gelenkfreiheitsgraden ermöglicht es, den Träger 2 in den drei translatorischen Raumrichtungen X, Y, Z orientierungstreu zu verlagern, so daß eine dreiachsige Bearbeitung eines Werkstückes ermöglicht wird. Ein Verschwenken des Trägers 2 um eine der genannten Achsen X, Y, Z ist hierbei unerwünscht.

An den Streben 3 ist jeweils eine eigene Vorrichtung 7 zur Ermittlung einer Torsion der betreffenden Strebe um deren Längsachse vorgesehen. Wesentlich ist, daß die Messung im Kraftfluß erfolgt. Dies kann an geeigneten Stellen der Gelenke 4 und 5 sowie an dem Gestell 1 oder dem Träger 2 erfolgen. Diese Vorrichtung 7 erzeugt einen Befehl bzw. ein Signal, in Abhängigkeit dessen jeweils der Torsionsantrieb 6 der betreffenden Strebe 3 betätigt wird. Die Vorrichtung zur Ermittlung einer Torsion umfaßt einen nicht näher dargestellten Meßaufnehmer zur Erfassung des in einer Strebe wirkenden Moments. Hierzu kann beispielsweise ein Kraftaufnehmer bzw. Dehnungsmeßstreifen verwendet werden. Weiterhin umfaßt die Vorrichtung 7 eine Auswertvorrichtung zur Ermittlung der Torsion der Strebe aus dem erfaßten Moment sowie der bekannten und vorgegebenen Torsionssteifigkeit der Strebe 3. Die nicht dargestellte Auswertvorrichtung dient dabei als Mittel zur Umsetzung der Signale des Meßaufnehmers in für eine Regelvorrichtung geeignete Parameter, die dann die in den Streben jeweils auftretenden Torsionen repräsentieren. Wie in Fig. 1 dargestellt, kann ein Teil der Vorrichtung 7, d.h. insbesondere der Meßaufnehmer, unmittelbar an einer Strebe 3, hier vorzugsweise an dem Zylinder appliziert werden. Die Auswertvorrichtung wird vorzugsweise separat angeordnet und kann beispielsweise in eine Steuer- und/oder Regelvorrichtung 8 integriert werden, die u.a. die Längenveränderung der Streben 3 zur Zustellung des Trägers 2 gegenüber dem Gestell 1 übernimmt.

In diese Steuer- und Regelvorrichtung 8 ist eine Torsionskompensationsregelvorrichtung 10 eingebunden, die einen Regler 9 sowie die Vorrichtung zur Ermittlung der Torsionen der Streben 3 umfaßt.

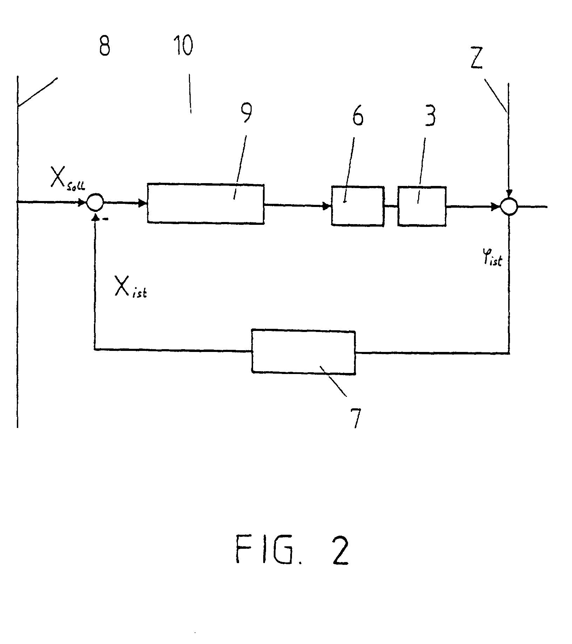

Die Torsionskompensationsregelvorrichtung 10 ist, wie in Fig. 2 dargestellt, in ein kaskadenförmiges Steuerungskonzept der Steuer- und Regelvorrichtung 8 integriert, wobei die Rückkopplung des Torsionsmeßsignals aus den Streben 3 auf eine Stellgröße für die Torsionsantriebe 6 autonom, d.h. unabhängig von der übergeordneten Steuerung bzw. Regelung der Längsveränderungen der Streben 3 erfolgt. Wie in Fig. 2 dargestellt, wird dem Regler 9 eingangsseitig eine Regeldifferenz aufgeschaltet, die aus Parametern X_{Soll}, die die Torsionssollwerte der Streben repräsentieren, und Parametern Xᵢₛₜ, die von der Torsionsermittlungsvorrichtung 7 erzeugte Torsionsistwerte repräsentieren, gebildet. Die Parameter X_{Soll}, die die Torsionssollwerte repräsentieren, werden aus der Steuer- und Regelvorrichtung 8 abgezweigt. Diese Größe ändert sich während des Betriebs des Systems in der Praxis kaum, da die entsprechenden Werte für die einzelnen Streben zur Vermeidung einer Verschwenkung des Trägers 2 bzw. der Hauptspindel 11 theoretisch konstant bleiben sollen. Lediglich fertigungsbedingte und thermisch bedingte Offsetwerte können zeitlich geringfügig schwanken. Diese Größen besitzen jedoch eher einen statischen Charakter und ändern sich nur sehr langsam.

Die während des Betriebs aus den Reaktionskräften resultierenden Torsionen treten als Störgrößen Z in dem System im Bereich der Regelstrecke, d.h. der Struktur der Streben 3 auf und führen zu Torsionswinkeln zwischen dem gestellseitigen Gelenk 4 und dem trägerseitigen Gelenk 5 in Form eines Differenzwinkels ϕᵢₛₜ. Dieser Torsionswinkel wird unmittelbar, in dem dargestellten Ausführungsbeispiel mittelbar, durch die Vorrichtungen 7 zur Ermittlung der Torsionen der Streben 3 erfaßt. Konkret lassen sich beispielsweise mit Hilfe von Kraftaufnehmern oder Dehnungsmeßstreifen die in der Strebenstruktur auftretenden Kräfte bzw. Momente erfassen. Da die Geometrie und damit die Torsionssteifigkeit der Streben 3 bekannt sind, können mit Hilfe der nicht dargestellten Auswerterschaltung anhand der Kraftgrößen und der Informationen über die Strebenstruktur Verschiebungsgrößen ermittelt werden, die in für die Torsionskompensationsregelvorrichtung 10 geeignete, die Torsionsistwerte repräsentierende Parameter Xᵢₛₜ umgerechnet werden. Diese Parameter werden auf die entsprechenden Torsionssollwert-Parameter zurückgeführt.

Die Regelung kann sowohl analog als auch digital erfolgen. Die von dem Regler 9 erzeugten Stellgrößen werden schließlich den Torsionsantrieben 6 aufgeschaltet, zur Kompensation von Verlagerungen der Hauptspindel, die während des Betriebs der Vorrichtung kontinuierlich durchgeführt wird. Bei einem Ausfall der Torsionskompensationsregelvorrichtung 10 kann aufgrund der autonomen Ausbildung in der Steuerund Regelungsvorrichtung 8 die Tripod-Lagerungsvorrichtung in herkömmlicher Weise ohne Torsionskompensation weiter betrieben werden.

Zur Veranschaulichung der Wirkungsweise der Torsionskompensationsregelungsvorrichtung 10 sei angenommen, daß an der Spindel 11 bzw. dem Träger 2 eine Kraft in Richtung der in Fig. 1 horizontalen linken Strebe angreife. Hierdurch wird in dieser linken Strebe eine Gegenkraft erzeugt. In der rechten Strebe hingegen wird ein Drehmoment erzeugt. Wird die Kraft in den Streben gemessen, kann durch die translatorische Hauptbewegung der linken Strebe die Verschiebung der Hauptspindel, die aufgrund der Kraft und der damit verbundenen Federwirkung in dieser Strebe erzeugt wird, kompensiert werden. Ohne Hybridantrieb, d.h. ohne Zuschaltung der Torsionsantriebe könnte die Verdrehung der rechten Strebe, die aufgrund des Drehmomentes und der damit verbundenen Torsionsfederwirkung entsteht, nicht kompensiert werden. Der hybride Antrieb dreht die Hauptspindel entgegen dem wirkenden Drehmoment in der Strebe wieder zurück in ihre senkrechte Lage.

in Abwandlung von dem in Fig. 1 dargestellten Ausführungsbeispiel kann an dem Träger anstelle einer Hauptspindel auch eine Greiferkonstruktion für einen Roboter oder eine Laserbearbeitungsvorrichtung vorgesehen werden.

## Patentansprüche

1. Tripod-Lagerungsvorrichtung mit einem feststehenden Gestell (1) und einem relativ dazu bewegbaren Träger (2), die über drei in ihrer Länge verstellbare Streben (3) miteinander verbunden sind, wobei jede Strebe (3) an dem Gestell (1) und an dem Träger (2) über zumindest ein Gelenk (4,5) angekoppelt ist, **dadurch gekennzeichnet, daß** jede Strebe an dem Gestell und an dem Träger über je ein Gelenk (4,5) mit zwei Drehfreiheitsgeraden angekoppelt ist, und eine Torsionskompensationregelvorrichtung (10) vorgesehen ist, die mit den einzelnen Streben (3) jeweils zugeordneten Torsionsantrieben (6) zusammenwirkt, zum Verdrehen des trägerseitigen Gelenks der betreffenden Strebe relativ zu dem gestellseitigen Gelenk dieser Strebe um deren Längsachse zur Ausregelung von in den Streben (3) auftretenden Torsionen.

2. Tripod-Lagerungsvorrichtung nach Anspruch 1, **dadurch gekennzeichnet, daß** der Torsionsantrieb (6) zwischen dem trägerseitigen Gelenk (5) und dem gestellseitigen Gelenk (4) angeordnet ist.

3. Tripod-Lagerungsvorrichtung nach Anspruch 1 oder 2, **dadurch gekennzeichnet, daß** der Torsionsantrieb (6) an dem trägerseitigen Ende der Strebe (3) angeordnet ist.

4. Tripod-Lagerungsvorrichtung nach einem der Ansprüche 1 bis 3, **dadurch gekennzeichnet, daß** der Torsionsantrieb (6) als rotatorische Antriebsvorrichtung für kleine Wege mit hoher Antriebsgeschwindigkeit ausgebildet ist.

5. Tripod-Lagerungsvorrichtung nach einem der Ansprüche 1 bis 4, **dadurch gekennzeichnet, daß** die Gelenke (4,5) als Kreuzgelenke ausgebildet sind.

6. Tripod-Lagerungsvorrichtung nach einem der Ansprüche 1 bis 5, **dadurch gekennzeichnet, daß** in einer Ruhestellung des Trägers die Streben (3) in den drei Raumrichtungen (X,Y,Z) senkrecht zueinander angeordnet sind.

7. Tripod-Lagerungsvorrichtung nach einem der Ansprüche 1 bis 6, **dadurch gekennzeichnet, daß** alle Streben (3) gleichartig ausgebildet sind.

8. Tripod-Lagerungsvorrichtung nach einem der Ansprüche 1 bis 7, **dadurch gekennzeichnet, daß** der Träger (2) an den Streben (3) im Raum orientierungstreu gelagert ist.

9. Tripod-Lagerungsvorrichtung nach einem der Ansprüche 1 bis 8, **dadurch gekennzeichnet, daß** an den Streben (3) jeweils eine Vorrichtung (7) zur Ermittlung einer Torsion der beteffenden Strebe an deren Längsachse vorgesehen ist zur Erzeugung eines Signals, in Abhängigkeit dessen jeweils der Torsionsantrieb (6) der betreffenden Strebe betätigt wird.

10. Tripod-Lagerungsvorrichtung nach Anspruch 9, **dadurch gekennzeichnet, daß** die Vorrichtung (7) zur Ermittlung einer Torsion einen Meßaufnehmer zur Erfassung des in einer Strebe wirkenden Moments umfaßt, sowie eine Auswertvorrichtung zur Ermittlung der Torsion der Strebe aus dem erfaßten Moment sowie der vorgegebenen Torsionssteifigkeit der Strebe.

11. Tripod-Lagerungsvorrichtung nach einem der Ansprüche 1 bis 10, **dadurch gekennzeichnet, daß** in eine Steuer- und/oder Regelvorrichtung (8) zur Längenveränderung der Streben eine Torsionskompensationsregelvorrichtung (10) integriert ist, die einen Regler (9) sowie Vorrichtungen (7) zur Ermittlung der Torsionen der Streben umfaßt, wobei dem Regler (9) eingangsseitig eine Regeldifferenz aufgeschaltet ist, die aus Parametern (X_{Soll}), die die Torsionssollwerte repräsentieren, und Parametern (Xᵢₛₜ), die von der Torsionsermittlungsvorrichtung erzeugten Torsionsistwerte repräsentieren, gebildet ist, und der Reglerausgang auf die Torsionsantriebe (6) geschaltet ist.

12. Tripod-Lagerungsvorrichtung nach Anspruch 10 oder 11, **dadurch gekennzeichnet, daß** die Rückkopplung der die Torsionsistwerte repräsentierenden Parameter (Xᵢₛₜ) auf die Reglereingangsseite autonom erfolgt, ohne die Bewegungssteuerung und/oder -regelung (8) der Längenveränderung der Streben (3) zu beeinflussen.

13. Verfahren zur Torsionskompensation in einer Vorrichtung nach einem der Ansprüche 1 bis 12, bei dem in den Streben (3) auftretende, lastbedingte Torsionen erfaßt, mit Solltorsionen verglichen und die ermittelte Torsionsdifferenz (X_{ist,}X_{Soll}) durch Beaufschlagung der Torsionsantriebe ausgeregelt wird.

14. Verfahren nach Anspruch 13, **dadurch gekennzeichnet, daß** das Verfahren während des Betriebes der Vorrichtung kontinuierlich on-line durchgeführt wird.

## Claims

1. Tripod bearing device having a stationary frame (1) and a carrier (2), moveable relative to it, which are joined together via three braces (3), adjustable in length, wherein each brace (3) is coupled to the frame (1) and the carrier (2) via at least one joint (4,5), **characterized in that** each brace is coupled with the frame and the carrier via at least one joint (4,5) having two rotational degrees of freedom, and **in that** a torsion compensation dosed-loop control device (10) is provided which interacts with the torsion drives (6) assigned to the individual braces (3), for twisting the joint of the relevant brace on the side of the carrier relative to the joint of this brace on the side of the frame about its longitudinal axis for compensating torsions occurring in the braces (3).

2. Tripod bearing device according to claim 1, **characterized in that** the torsion drive (6) is arranged between the joint (5) on the side of the carrier and the joint on the side of the frame (4).

3. Tripod bearing device according to claim 1 or 2, **characterized in that** the torsion drive (6) is arranged at the end of the brace (3) on the side of the carrier.

4. Tripod bearing device according to one of the claims 1 to 3, **characterized in that** the torsion drive (6) is formed as a rotational drive device for small distances with a high drive speed.

5. Tripod bearing device according to one of the claims 1 to 4, **characterized in that** the joints (4,5) are formed as cardan joints.

6. Tripod bearing device according to one of the claims 1 to 5, **characterized in that** the braces (3) are arranged perpendicular to one another in the three spatial directions (X,Y,Z) in a neutral position of the carrier.

7. Tripod bearing device according to one of the claims 1 to 6, **characterized in that** all braces (3) are formed in a similar manner.

8. Tripod bearing device according to one of the claims 1 to 7, **characterized in that** the carrier (2) is supported on the braces (3) with true orientation in space.

9. Tripod bearing device according to one of the claims 1 to 8, **characterized in that** on each of the braces (3) a device (7) for a determination of a torsion of the relevant brace on its longitudinal axis is provided for the generation of a signal, in dependence of which the torsion drive (6) of the relevant brace is operated.

10. Tripod bearing device according to claim 9, **characterized in that** the device (7) for a determination of a torsion incorporates a measurement transducer for the acquisition of the moment acting in a brace as well as an evaluation device for determining a torsion of the brace from the acquired moment together with the specified torsional stiffness of the braces.

11. Tripod bearing device according to one of the claims 1 to 10, **characterized in that** a torsion compensation closed-loop control device (10) is integrated in an open-loop and/or closed-loop control device (8) for changing the length of the braces, said torsion compensation dosed-loop control device incorporating a controller (9) and devices (7) for the determination of the torsions of the braces, wherein a system deviation is provided to an input side of the controller (9), said system deviation being formed from parameters (Xₛₑₜ), which represent the torsion set values, and parameters (X_{act}), which represent the torsion actual values produced from the torsion determination device, and the controller output being connected to the torsion drives (6).

12. Tripod bearing device according to claim 10 or 11, **characterized in that** the feedback of the parameters (X_{act}) representing the torsion actual values to the controller input side occurs autonomously without affecting the movement open-loop and/or closed-loop control (8) of the change of length of the braces (3).

13. Method of torsion compensation in a device according to one of the claims 1 to 12, wherein torsions caused by the load occurring in the braces (3) are acquired, compared with set torsions and the determined torsion difference (X_{act}, Xₛₑₜ) is compensated by the activation of the torsion drives.

14. Method according to claim 13, **characterized in that** the method of operation of the device is implemented continually on-line.

## Revendications

1. Dispositif de support trépied avec un bâti (1) fixe et un support (2) mobile par rapport à celui-ci qui sont reliés entre eux par trois jambes de force (3) réglables en longueur, chaque jambe de force (3) étant couplée au bâti (1) et au support (2) par au moins une articulation (4, 5), **caractérisé en ce que** chaque jambe de force est couplée respectivement au bâti et au support par une articulation (4, 5) avec deux degrés de liberté en rotation, et qu'il est prévu un dispositif de compensation de torsion (10) qui coopère avec des dispositifs d'entraînement en torsion (6) associés aux différentes jambes de force (3), pour faire tourner l'articulation côté support de la jambe de force concernée par rapport à l'articulation côté bâti de cette jambe de force autour de l'axe longitudinal de celle-ci aux fins de régler des torsions apparaissant dans les jambes de force (3).

2. Dispositif de support trépied selon la revendication 1, **caractérisé en ce que** le dispositif d'entraînement en torsion (6) est disposé entre l'articulation (5) côté support et l'articulation (4) côté bâti.

3. Dispositif de support trépied selon la revendication 1 ou 2, **caractérisé en ce que** le dispositif d'entraînement en torsion (6) est disposé à l'extrémité côté support de la jambe de force (3).

4. Dispositif de support trépied selon l'une des revendications 1 à 3, **caractérisé en ce que** le dispositif d'entraînement en torsion (6) est réalisé sous forme de dispositif d'entraînement en rotation pour de faibles courses avec une vitesse d'entraînement élevée.

5. Dispositif de support trépied selon l'une des revendications 1 à 4, **caractérisé en ce que** les articulations (4, 5) sont réalisées sous forme de joints de cardan.

6. Dispositif de support trépied selon l'une des revendications 1 à 5, **caractérisé en ce que** dans une position de repos du support, les jambes de force (3) sont perpendiculaires entre elles dans les trois direction (X, Y, Z) dans l'espace.

7. Dispositif de support trépied selon l'une des revendications 1 à 6, **caractérisé en ce que** toutes les jambes de force (3) sont réalisées de manière similaire.

8. Dispositif de support trépied selon l'une des revendications 1 à 7, **caractérisé en ce que** le support (2) est monté sur les jambes de force (3) de manière à conserver toujours la même orientation dans l'espace.

9. Dispositif de support trépied selon l'une des revendications 1 à 8, **caractérisé en ce que** sur chacune des jambes de force (3), il est prévu un dispositif (7) pour déterminer une torsion de la jambe de force concernée sur l'axe longitudinal de celle-ci, aux fins de produire un signal en fonction duquel on actionne le dispositif d'entraînement en torsion (6) de la jambe de force concernée.

10. Dispositif de support trépied selon la revendication 9, **caractérisé en ce que** le dispositif (7) de détermination d'une torsion comprend un capteur de mesure pour détecter le moment agissant dans une jambe de force, ainsi qu'un dispositif de traitement pour déterminer la torsion de la jambe de force à partir du moment détecté et de la rigidité à la torsion prédéterminée de la jambe de force.

11. Dispositif de support trépied selon l'une des revendications 1 à 10, **caractérisé en ce que** dans un dispositif de commande et/ou de réglage (8) destiné à modifier la longueur des jambes de force, il est intégré un dispositif de compensation de torsion (10) qui comprend un régulateur (9) ainsi que des dispositifs (7) pour déterminer les torsions des jambes de force, une différence de réglage étant appliquée à l'entrée du régulateur (9), laquelle différence est formée à partir de paramètres (Xₛₒₗₗ) qui représentent les valeurs de consigne de torsion, et de paramètres (Xᵢₛₜ) qui représentent des valeurs réelles de torsion produites par le dispositif de détermination de torsion, et que la sortie du régulateur est connectée aux dispositifs d'entraînement en torsion (6).

12. Dispositif de support trépied selon la revendication 10 ou 11, **caractérisé en ce que** la ré-application à l'entrée du régulateur des paramètres (Xᵢₛₜ) représentant les valeurs réelles de torsion s'effectue de manière autonome, sans influencer la commande et/ou la régulation (8) destinée à modifier la longueur des jambes de force (3).

13. Procédé de compensation de torsion dans un dispositif selon l'une des revendications 1 à 12, dans lequel on détecte des torsions dans les jambes de force (3) dues à une charge, on les compare à des torsions de consigne et on régule la différence de torsion (Xᵢₛₜ, Xₛₒₗₗ) déterminée en sollicitant les dispositifs d'entraînement en torsion.

14. Procédé selon la revendication 13, **caractérisé en ce que** le procédé est mis en oeuvre en continu et en ligne pendant le fonctionnement du dispositif.
